# EUROPEAN PATENT APPLICATION

(11) **EP 4 582 857 A1**
(43) Date of publication of application: **09.07.2025**
(21) Application number: 23860412.8
(22) Date of filing: 30.08.2023
(51) Int. Cl.: G02F 1/13, G02F 1/1335, G02F 1/1343, G02F 1/1345

(54) **LIGHT CONTROL SHEET**

(30) Priority: 01.09.2022 JP 2022139138
(71) Applicant: Toppan Holdings Inc., Tokyo 110-0016 (JP)
(72) Inventor: YASUHARA Toshiji, Tokyo 110-0016 (JP); NAKAMURA Gen, Tokyo 110-0016 (JP); NODA Satoshi, Tokyo 110-0016 (JP)
(74) Representative: TBK
(86) International application number: PCT/JP2023/031511
(87) International publication number: WO 2024/048650

(57) **Abstract**

A light control sheet (10) includes: a light control layer including a liquid crystal composition; and a first transparent electrode layer and a second transparent electrode layer that are a pair of transparent electrode layers. The pair of transparent electrode layers sandwiches the light control layer. The light control sheet has a first connection region (SA) to which a wiring (61) that applies a voltage to the first transparent electrode layer is connected and a second connection region (SB) to which a wiring (62) that applies a voltage to the second transparent electrode layer is connected. The first connection region and the second connection region are disposed along one side of the light control sheet as viewed from a position opposed to a front surface of the light control sheet. The first transparent electrode layer and the second transparent electrode layer each have a surface resistance of 150 Ω/□ or less.

## Description

### Technical Field

The present disclosure relates to a light control sheet that is variable in light transmittance.

### Background Art

A light control sheet includes a light control layer including a liquid crystal composition, and a pair of transparent electrode layers that sandwiches the light control layer. A driving voltage is applied between the pair of transparent electrode layers. The orientation state of liquid crystal molecules is changed depending on whether a driving voltage is applied. This makes it possible to switch a transparent state in which light passes through the light control layer and an opaque state in which light is scattered in the light control layer (see, for example, PTL 1).

### Citation List

### Patent Literature

PTL 1: JP 2018-45135 A

### Summary of the Invention

### Technical Problem

The driving voltage is input to the light control sheet through a wiring connected to an end of the light control sheet. As extending farther from a connection region that is a region to which the wiring is connected, the voltage applied to the light control sheet drops below the input voltage to the connection region. As the light control sheet grows larger, a far-end region that is a region farthest from the connection region has a greater voltage drop. This raises a problem that it is more difficult to switch the transparent state and the opaque state in the far-end region.

As the input voltage increases, it is possible to apply a higher voltage to the far-end region in spite of a voltage drop and therefore settle the problem. However, as the input voltage increases, the transparent electrode layers and the light control layer are damaged more, the light control sheet is decreased in long-term reliability, and more electric power is further consumed to impose a heavier environmental load.

**In** addition, for example, it is also conceivable to make a voltage drop smaller by using more connection regions and decreasing the distance to the far-end region such as by disposing connection regions at positions along two respective opposed sides of the light control sheet. However, if more connection regions are used, wirings are also pulled out from more positions in the connection regions. This makes the light control sheet inferior in design and also makes restrictions stricter on the installation location of the light control sheet.

**In** addition, to cause a larger electric current to flow through the light control sheet, it is also conceivable to connect more and larger wiring substrates to a connection region. However, it is also inevitable in this case that the light control sheet is inferior in design.

A new configuration is thus requested that makes it possible to suppress a voltage drop.

### Solution to Problem

An aspect of a light control sheet includes: a light control layer including a liquid crystal composition; and a first transparent electrode layer and a second transparent electrode layer that are a pair of transparent electrode layers. The pair of transparent electrode layers sandwiches the light control layer. The light control sheet has a first connection region to which a wiring that applies a voltage to the first transparent electrode layer is connected and a second connection region to which a wiring that applies a voltage to the second transparent electrode layer is connected. The first connection region and the second connection region are disposed along one side of the light control sheet as viewed from a position opposed to a front surface of the light control sheet. The first transparent electrode layer and the second transparent electrode layer each have a surface resistance of 150 Ω/□ or less.

### Brief Description of the Drawings

[Fig. 1] Fig. 1 is a diagram illustrating a planar structure of a light control sheet according to an embodiment.
[Fig. 2] Fig. 2 is a diagram illustrating a layer configuration and an electrical configuration of the light control sheet according to the embodiment.
[Fig. 3] Fig. 3 is a diagram illustrating another example of the layer configuration and the electrical configuration of the light control sheet according to the embodiment.
[Fig. 4] Fig. 4 is a diagram illustrating another example of the layer configuration and the electrical configuration of the light control sheet according to the embodiment.
[Fig. 5] Fig. 5 is a diagram illustrating a modification example of the planar structure of the light control sheet according to the embodiment.
[Fig. 6] Fig. 6 is a diagram illustrating a modification example of the planar structure of the light control sheet according to the embodiment.

### Description of the Embodiments

An embodiment of a light control sheet will be described with reference to the drawings.

### [Configuration of Light Control Sheet]

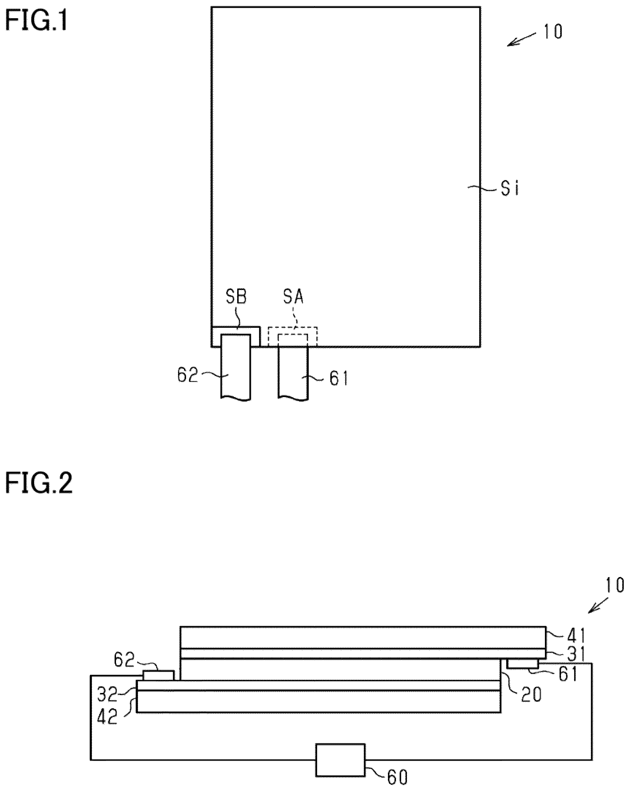

The configuration of the light control sheet will be described with reference to Figs. 1 and 2. As illustrated in Fig. 1, a light control sheet 10 has a substantially rectangular shape as viewed from a position opposed to the front surface of the light control sheet 10. The light control sheet 10 includes a light control region Si, and a first connection region SA and a second connection region SB. The light control region Si is a region that is variable in light transmittance. The connection regions SA and SB are regions to which wiring sections 61 and 62 each of which applies a driving voltage to the light control sheet 10 are connected. The first wiring section 61 is connected to the first connection region SA and the second wiring section 62 is connected to the second connection region SB.

The two connection regions SA and SB are located at an end of the light control sheet 10 and arranged side by side along one side of the light control sheet 10. For example, the connection regions SA and SB are disposed near one corner of the light control sheet 10.

FIG. 2 illustrates the layer configuration and the electrical configuration of the light control sheet 10. The light control sheet 10 includes a light control layer 20, a first transparent electrode layer 31, a second transparent electrode layer 32, a first transparent support layer 41, and a second transparent support layer 42. The light control layer 20 is sandwiched between the first transparent electrode layer 31 and the second transparent electrode layer 32 and is in contact with these transparent electrode layers 31 and 32. The first transparent support layer 41 supports the first transparent electrode layer 31 on the opposite side of the first transparent electrode layer 31 to the light control layer 20. The second transparent support layer 42 supports the second transparent electrode layer 32 on the opposite side of the second transparent electrode layer 32 to the light control layer 20.

The light control layer 20 includes a transparent polymer layer and a liquid crystal composition. The transparent polymer layer has a void and this void is filled with the liquid crystal composition. The shape of the void is a spherical shape, an ellipsoidal shape, or an indefinite shape.

The type in which the liquid crystal composition is held in the light control layer 20 is any of a polymer network type, a polymer dispersion type, and a capsule type. The light control layer 20 of the polymer network type includes a three-dimensional mesh polymer network. The polymer network is an example of the transparent polymer layer. The liquid crystal composition is held in mesh voids communicated with each other in the polymer network. The light control layer 20 of the polymer dispersion type includes a transparent polymer layer that defines a large number of isolated voids. The liquid crystal composition is held in each of the voids dispersed in the transparent polymer layer. The light control layer 20 of the capsule type holds the liquid crystal composition in a void in each of capsules dispersed in a transparent polymer layer.

The transparent polymer layer is a polymer of a photopolymerizable compound. The photopolymerizable compound is, for example, an UV-polymerizable compound. The UV-polymerizable compound is, for example, an acrylate compound such as butyl ethyl acrylate or cyclohexyl acrylate, a methacrylate compound such as N,N-dimethylaminoethyl methacrylate or phenoxyethyl methacrylate, a stilbene compound, a diacrylate compound, a dimethacrylate compound, a triacrylate compound, a trimethacrylate compound, a tetraacrylate compound, a tetramethacrylate compound, or an oligomer of any of these compounds. It is preferable that the ratio of the transparent polymer layer to the total mass of the light control layer 20 be 20 mass% or more and 80 mass% or less.

The liquid crystal composition includes, for example, liquid crystal molecules having positive dielectric anisotropy. That is, the dielectric constant of the liquid crystal molecules in the direction of the long axis is greater than the dielectric constant of the liquid crystal molecules in the direction of the short axis.

The liquid crystal molecules are, for example, a Schiff base, azo-based, azoxy-based, biphenyl-based, terphenyl-based, benzoic-acid-ester-based, tolan-based, pyrimidine-based, pyridazine-based, cyclohexanecarboxylic-acid-ester-based, phenylcyclohexane-based, biphenylcyclohexane-based, dicyanobenzene-based, naphthalene-based, or dioxane-based compound.

The liquid crystal composition may contain a dichroic dye, a viscosity reducing agent, an anti-foam agent, an antioxidant, a weather-proofing agent, and the like in addition to the liquid crystal molecules. Examples of the weather-proofing agent include an ultraviolet absorber and a light stabilizer.

In addition, the light control layer 20 may include spacers dispersed in the whole of the transparent polymer layer. The spacers define the thickness of the light control layer 20 around the spacers to equalize the light control layer 20 in thickness. As long as the spacers each have light-transmissive properties, the spacers may be bead spacers or photo-spacers each formed by exposing and developing a photoresist.

The first transparent electrode layer 31 and the second transparent electrode layer 32 each have electrical conductivity and are transparent to light in the visible region. A material of each of the transparent electrode layers 31 and 32 is, for example, indium tin oxide, fluorine-doped tin oxide, tin oxide, zinc oxide, a carbon nanotube, poly(3,4-ethylenedioxythiophene), silver, silver alloy, or the like.

The first transparent electrode layer 31 and the second transparent electrode layer 32 each have a surface resistance of 150 Ω/□ or less. The surface resistance is measured in compliance with JIS K 7194 by using a four-point probe method for the surface opposite to the surface in contact with each of the transparent support layers 41 and 42.

The first transparent support layer 41 and the second transparent support layer 42 are base members that are each transparent to light in the visible region. A material of each of the transparent support layers 41 and 42 is, for example, a synthetic resin or an inorganic compound. The synthetic resin is, for example, polyester such as polyethylene terephthalate or polyethylene naphthalate, polyacrylate such as polymethyl methacrylate, polycarbonate, polyolefin, or the like. The inorganic compound is, for example, silicon dioxide, silicon oxynitride, silicon nitride, or the like.

The first wiring section 61 is connected to the first transparent electrode layer 31 in the first connection region SA and the second wiring section 62 is connected to the second transparent electrode layer 32 in the second connection region SB. In the first connection region SA, the first transparent electrode layer 31 is exposed from the light control layer 20, and the second transparent electrode layer 32 and the second transparent support layer 42. In the second connection region SB, the second transparent electrode layer 32 is exposed from the light control layer 20, and the first transparent electrode layer 31 and the first transparent support layer 41. It is to be noted that Fig. 2 illustrates that the second wiring section 62 is disposed at the end opposite to the end at which the first wiring section 61 is located for the sake of convenience, but the wiring sections 61 and 62 are disposed as described with reference to Fig. 1.

The first wiring section 61 and the second wiring section 62 each include, for example, an electrically conductive adhesive layer and a wiring substrate. The electrically conductive adhesive layer is formed by using, for example, an anisotropic conductive film (ACF), an anisotropic conductive paste (ACP), an isotropic conductive film (ICF), an isotropic conductive paste (ICP), or the like. The wiring substrate is, for example, flexible printed circuits (FPCs).

Alternatively, the first wiring section 61 and the second wiring section 62 may each have a structure in which an electrically conductive material such as an electrically conductive tape and a conductive wire are bonded by soldering.

The transparent electrode layers 31 and 32 are electrically connected to a control section 60 through the wiring sections 61 and 62. The control section 60 applies a driving voltage to the transparent electrode layers 31 and 32 through the wiring sections 61 and 62. The driving voltage is an alternating-current voltage that changes the orientation state of liquid crystal molecules. The control section 60 controls the potential difference between the transparent electrode layers 31 and 32 by controlling whether to apply a voltage and controlling the magnitude of the voltage to be applied. A light control device includes the light control sheet 10, the control section 60, and the wiring sections 61 and 62.

The light control sheet 10 switches from one of the transparent state and the opaque state to the other on the basis of a change in the orientation state of the liquid crystal molecules. The transparent state is a state of relatively high light transmittance, that is, parallel transmittance. The opaque state is a state of relatively low light transmittance. In addition, the transparent state is a state of relatively low haze. The opaque state is a state of relatively high haze.

When no driving voltage is applied, the orientation of the liquid crystal molecules in the direction of the long axis is irregular. Light entering the light control sheet 10 is therefore scattered in the light control layer 20 in various directions because of the birefringence index of the liquid crystal molecules and the refractive index difference between the liquid crystal molecules and the transparent polymer layer. The light control sheet 10 thus enters the opaque state when no driving voltage is applied.

In a case where the liquid crystal molecules have positive dielectric anisotropy, the application of a driving voltage orients the liquid crystal molecules with the direction of the long axis of the liquid crystal molecules along the direction of an electric field. That is, the orientation of the liquid crystal molecules is changed to cause the direction of the long axis to be along the thickness direction of the light control layer 20. As a result, light is scattered less easily in the light control layer 20 and it is easier for light to pass through the light control sheet 10. The light control sheet 10 thus enters the transparent state when a driving voltage is applied.

At least one of the front surface and the back surface of the light control sheet 10 is bonded to a transparent plate including glass, resin, or the like. The transparent plate is, for example, a window glass included in each type of building, a partition installed indoors, or a window glass or a windshield included in a mobile object such as a vehicle or an aircraft. A surface of the transparent plate may be a flat surface or a curved surface.

### [Characteristics of Light Control Sheet]

An equivalent circuit of the large light control sheet 10 driven by an alternating-current voltage is a circuit in which a parallel circuit of a resistor corresponding to the resistance value of the light control layer 20 and a capacitor corresponding to the electrostatic capacitance of the light control layer 20 is connected in series between a resistor corresponding to the resistance values of the first transparent electrode layer 31 and the first wiring section 61 and a resistor corresponding to the resistance values of the second transparent electrode layer 32 and the second wiring section 62.

To suppress a voltage drop in the light control sheet 10, it is necessary to decrease the joint impedance of the circuit. It is, however, more difficult to design or manufacture the light control layer 20 if the electrical characteristics of the light control layer 20 such as electrostatic capacitance are also controlled in addition to optical characteristics. Accordingly, in the present embodiment, the transparent electrode layers 31 and 32 are decreased in resistance to decrease the joint impedance, thereby suppressing a voltage drop.

Specifically, the transparent electrode layers 31 and 32 each have a surface resistance of 150 Ω/□ or less, thereby making it possible to preferably suppress a voltage drop in a far-end region that is a region the farthest from the connection regions SA and SB in the light control sheet 10. This makes it possible to favorably switch the transparent state and the opaque state even in the far-end region. Such an effect is favorably obtained in a case where the light control sheet 10 is large, that is, in a case where a long side of the light control sheet 10 that is the longest is 500 mm or more. Furthermore, such an effect is prominent in a case where a long side of the light control sheet 10 is 2000 mm or more.

The surface resistance of each of the transparent electrode layers 31 and 32 is variable depending on a material or the thickness of each of the transparent electrode layers 31 and 32. For example, in a case where a material of each of the transparent electrode layers 31 and 32 is oxide such as indium tin oxide, it is possible to decrease the surface resistance by decreasing the amount of oxygen. In addition, if alloy such as silver alloy is used as a material of each of the transparent electrode layers 31 and 32, it is possible to decrease the surface resistance in comparison with the surface resistance of each of the transparent electrode layers 31 and 32 each including oxide. It is to be noted that the use of a metallic material such as silver as a material of each of the transparent electrode layers 31 and 32 allows infrared light to be absorbed, also offering a heat shielding effect.

In addition, the transparent electrode layers 31 and 32 are each increased in thickness to make it possible to decrease the surface resistance. The first transparent electrode layer 31 and the second transparent electrode layer 32 each have, for example, a thickness of 30 nm or more and 200 nm or less.

Additionally, to allow the difference in transparency between the transparent state and the opaque state to be visually recognized, the light control sheet 10 in the transparent state may have a visible light transmittance of 4% or more. In addition, the laminated body of the first transparent electrode layer 31 and the first transparent support layer 41 and the laminated body of the second transparent electrode layer 32 and the second transparent support layer 42 preferably each have a visible light transmittance of 20% or more.

Incidentally, significantly raised portions present on surfaces of the transparent electrode layers 31 and 32 sometimes cause large electric currents to flow between the raised portions and the opposed electrodes in a case where an overvoltage is applied to the light control sheet 10 or in a case where a high voltage is applied to the light control sheet 10 in a test to inspect the resistance to overvoltage, thereby modifying the raised portions and causing the raised portions to be visually recognized as black dots. The black dots formed in this way undesirably decrease the quality of the appearance of the light control sheet 10.

For example, in a case where the transparent electrode layers 31 and 32 are formed by sputtering, raised portions are formed because of electrical unevenness or arcing in a target. In a case where the transparent electrode layers 31 and 32 are increased in thickness to decrease the transparent electrode layers 31 and 32 in surface resistance, raised portions also tend to increase in size, facilitating formation of black dots.

To prevent the quality of the appearance of the light control sheet 10 from decreasing by suppressing such black dots from being formed, the maximum peak height Rp of a surface of each of the transparent electrode layers 31 and 32 is preferably 200 nm or less. The maximum peak height Rp is measured in compliance with JIS B 0601 for the surface opposite to the surface in contact with each of the transparent support layers 41 and 42.

Additionally, it is possible to suppress more black dots from being formed as the light control layer 20 grows thicker. The thickness of the light control layer 20 is, for example, 5 µm or more and 20 µm or less. To suppress black dots from being formed, the thickness of the light control layer 20 is preferably 15 µm or more.

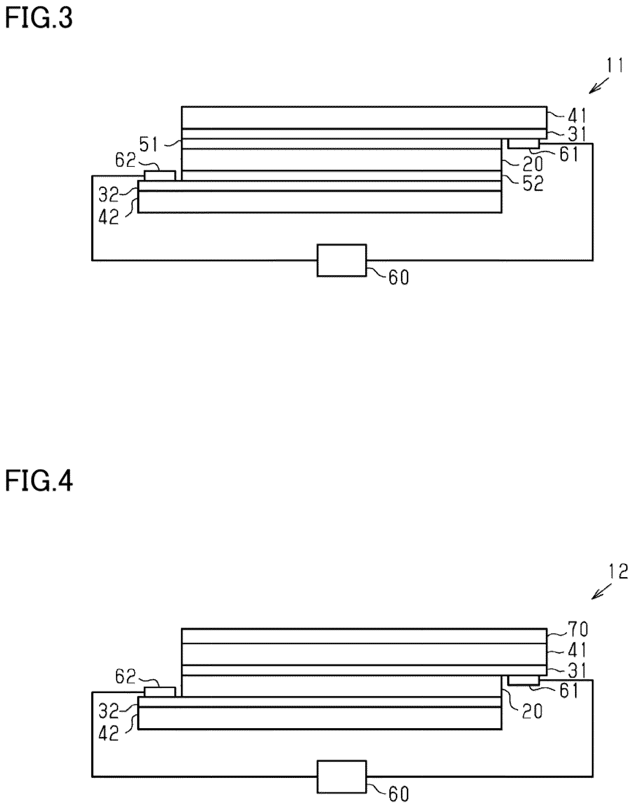

In addition, it is also possible to suppress black dots from being formed by disposing insulating layers between the transparent electrode layers 31 and 32 and the light control layer 20. The configuration of a light control sheet including an orientation layer that is an example of an insulating layer will be described with reference to Fig. 3.

As illustrated in Fig. 3, a light control sheet 11 includes a first orientation layer 51 and a second orientation layer 52 in addition to the light control layer 20, the transparent electrode layers 31 and 32, and the transparent support layers 41 and 42. The first orientation layer 51 is located between the light control layer 20 and the first transparent electrode layer 31 and is in contact with these layers. The second orientation layer 52 is located between the light control layer 20 and the second transparent electrode layer 32 and is in contact with these layers.

The first orientation layer 51 and the second orientation layer 52 regulate the orientation of the liquid crystal molecules. The orientation layers 51 and 52 are, for example, vertical orientation films. The vertical orientation films each orient the liquid crystal molecules with the direction of the long axis of the liquid crystal molecules along the thickness direction of the light control layer 20. In a case where the orientation layers 51 and 52 are vertical orientation films, liquid crystal molecules having negative dielectric anisotropy, that is, liquid crystal molecules each having a smaller dielectric constant in the direction of the long axis than the dielectric constant in the direction of the short axis, are used as the liquid crystal molecules.

A material of each of the orientation layers 51 and 52 is, for example, an organic compound such as polyimide, polyamide, polyvinyl alcohol, or a cyanide compound, an inorganic compound such as silicon oxide or zirconium oxide, silicone, or the like. Orientation processing for forming the orientation layers 51 and 52 is, for example, rubbing, polarized light irradiation, and microprocessing.

When no driving voltage is applied, the light control sheet 11 receives orientation regulation force from each of the orientation layers 51 and 52 and the liquid crystal molecules are oriented with the direction of the long axis of the liquid crystal molecules along the thickness direction of the light control layer 20. As a result, light is scattered less easily in the light control layer 20 and it is easier for light to pass through the light control sheet 11. The light control sheet 11 thus enters the transparent state when no driving voltage is applied.

In a case where the liquid crystal molecules have negative dielectric anisotropy, the application of a driving voltage orients the liquid crystal molecules with the direction of the long axis of the liquid crystal molecules orthogonal to the direction of an electric field. That is, the orientation of the liquid crystal molecules is changed to an orientation in which the direction of the long axis is substantially orthogonal to the thickness direction of the light control layer 20. As a result, light is scattered more easily in the light control layer 20. The light control sheet 11 thus enters the opaque state when a driving voltage is applied.

In the light control sheet 11, the raised portions on the surfaces of the transparent electrode layers 31 and 32 are covered with the orientation layers 51 and 52. The raised portions are thus difficult to modify, that is, black dots are difficult to form, even in a case where a high voltage is applied to the light control sheet 11. This makes it possible to prevent the quality of the appearance of the light control sheet 11 from decreasing. To increase such an effect, it is preferable that the first orientation layer 51 and the second orientation layer 52 each have a thickness of 60 nm or more and 300 nm or less.

Additionally, as long as the light control sheet is configured to switch between the transparent state and the opaque state on the basis of a change in the orientation state of the liquid crystal molecules by the application of a driving voltage, the layer configuration of the light control sheet is not limited to the configurations illustrated in Figs. 2 and 3. For example, the light control sheet may include a polarizing layer that controls the polarization of light entering or passing through the light control layer 20 and the orientation layers 51 and 52 may be horizontal orientation films. It is possible to change whether the light control sheet enters the transparent state or the opaque state when applying a driving voltage depending on the presence or absence of the orientation layers 51 and 52, the direction in which the orientation layers 51 and 52 each apply orientation regulation force, the positive or negative dielectric anisotropy of the liquid crystal molecules, the presence or absence of the polarizing layer, and the like.

In addition, in particular, in a case where a material of each of the transparent electrode layers 31 and 32 is indium tin oxide, increasing the amounts of oxygen or the thicknesses of the transparent electrode layers 31 and 32 to decrease the surface resistance of the transparent electrode layers 31 and 32 makes the transparent electrode layers 31 and 32 yellowish. Accordingly, to prevent the light control sheet from appearing yellowish, it is preferable to add a bluish transparent functional layer to the light control sheet.

The transparent functional layer is, for example, a hard coat layer disposed on the front surface of the light control sheet, an IR cut layer having a function of cutting off infrared rays, an adhesive layer that bonds the hard coat layer and IR cut layer to another layer of the light control sheet, or an adhesive layer that bonds the first transparent support layer 41 or the second transparent support layer 42 to a transparent plate which is an attachment target of the light control sheet.

Fig. 4 illustrates an example of the layer configuration of a light control sheet 12 including a transparent functional layer. Fig. 4 exemplifies a configuration in which a transparent functional layer 70 is laminated on the first transparent support layer 41, but the transparent functional layer 70 may be disposed at a position corresponding to a function of the transparent functional layer 70. In addition, Fig. 4 exemplifies a configuration in which the transparent functional layer 70 is laminated having the same layer configuration as the layer configuration of the light control sheet 10, but the layer configuration of the light control sheet 11 described above may be applied to the layer configuration excluding the transparent functional layer 70.

The absorption bands of the transparent electrode layers 31 and 32 in the visible region and the absorption band of the transparent functional layer 70 in the visible region are different from each other. The transparent electrode layers 31 and 32 each exhibit high absorption within a wavelength range of 500 nm or less. Meanwhile, the transparent functional layer 70 exhibits high absorption within a wavelength range of 600 nm or more.

When the colors of the transparent electrode layers 31 and 32 and the transparent functional layer 70 are expressed by using the CIE 1976 (L*a*b*) color system compliant with JIS Z 8781 4, the transparent electrode layers 31 and 32 each have positive chromaticity b* and the transparent functional layer 70 has negative chromaticity b*.

According to this, the chromaticity a* and the chromaticity b* of the light control sheet 12 satisfy -8 ≤ a* ≤ 8 and -8 ≤ b* ≤ 8 in the transparent state. This facilitates a colorless appearance of the light control sheet 12. Furthermore, the chromaticity a* and the chromaticity b* of the light control sheet 12 preferably satisfy -3 ≤ a* ≤ 3 and -3 ≤ b* ≤ 3 in the transparent state.

### [Modification Examples]

Modification examples of the light control sheet 10 will be described. It is to be noted that the configuration of the light control sheet 11 or the light control sheet 12 may be applied to the following modification examples.

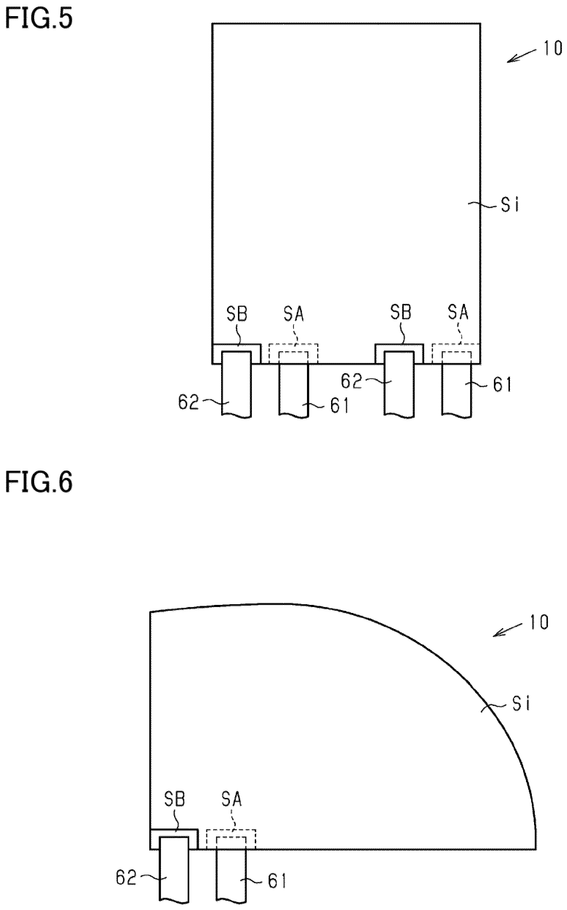

As illustrated in Fig. 5, the plurality of first connection regions SA and the plurality of second connection regions SB may be provided as long as the plurality of first connection regions SA and the plurality of second connection regions SB are arranged side by side along one side of the light control sheet 10. The first wiring section 61 is connected to each of the plurality of first connection regions SA and the second wiring section 62 is connected to each of the plurality of second connection regions SB.

Although the plurality of connection regions SA and SB is provided, wirings are pulled out from only positions along one side of the light control sheet 10 as long as all the connection regions SA and SB are arranged side by side along this side. This makes it possible to prevent deterioration in design of the light control sheet 10 f and prevent restrictions on the installation location of the light control sheet 10 from being stricter in comparison with the connection regions SA and SB disposed along a plurality of respective sides.

Meanwhile, the plurality of connection regions SA and SB is provided to allow the distance from the connection regions SA and SB to the far-end region to be decreased. For example, in a case where the connection regions SA and SB are disposed near one corner of the light control sheet 10 as illustrated in Fig. 1, the region near the corner opposed to the corner is a far-end region. In contrast, in a case where the connection regions SA and SB are disposed near both ends of one side of the light control sheet 10 as illustrated in Fig. 5, the region near the middle of the side opposed to the side is a far-end region.

In this way, the more connection regions SA and SB are used, the shorter the distance from the connection regions SA and SB to the far-end region. This makes it possible to reduce a voltage drop in the far-end region.

As illustrated in Fig. 6, the light control sheet 10 may have a shape that is applied to an automotive door glass. In this case, the light control sheet 10 has a shape similar to a shape surrounded by two straight lines that form a corner and a curve that joins ends of these straight lines and is bent to be convex with respect to the corner. The connection regions SA and SB are then disposed at the corner along the side that extends substantially horizontally and corresponds to the bottom side of the automotive door glass among the sides corresponding to the two straight lines. In other words, the connection regions SA and SB are disposed in the region opposed to the bent portion of the sides of the light control sheet 10.

This suppresses variability in the distances from the connection regions SA and SB to the respective sections of the bent side. It is therefore easier to equalize voltages applied to the ends of the light control sheet 10. Some of the ends are each suppressed from having a greater voltage drop. This makes it possible to stably switch the transparent state and the opaque state in the whole of the light control sheet 10.

### [Examples]

The light control sheet mentioned above will be described by using specific Examples and comparative examples.

The relationship between the surface resistance of a transparent electrode layer and a voltage drop was verified by fabricating light control sheets according to Examples and comparative examples.

### (Example 1)

A light control sheet including a light control layer of the polymer network type was fabricated. The light control sheet according to Example 1 has the layer configuration illustrated in Fig. 2.

Specifically, an acryl-based monomer that is an UV-polymerizable compound, a liquid crystal composition having positive dielectric anisotropy, and a polymerization initiator were mixed to prepare a coating solution. The coating solution was used and a coating film was formed to be sandwiched between a first transparent electrode layer supported by a first transparent support layer and a second transparent electrode layer supported by a second transparent support layer. A laminated body including the coating film was then irradiated with ultraviolet rays. This polymerized the acryl-based monomers in the coating film to form a polymer network and phase-separated the liquid crystal composition to form a light control layer in which the liquid crystal composition was held in the polymer network.

A material of each of the transparent support layers is polyethylene terephthalate. A material of each of the transparent electrode layers is indium tin oxide and the transparent electrode layers each have a surface resistance of 150 Ω/□.

### (Example 2)

A light control sheet according to Example 2 was obtained by using materials and steps similar to those of Example 1 except that the configurations of a first transparent electrode layer and a second transparent electrode layer were changed. A material of each of the transparent electrode layers is indium tin oxide and the transparent electrode layers each have a surface resistance of 80 Ω/□. The transparent electrode layers are different in thickness between Example 1 and Example 2.

### (Example 3)

A light control sheet according to Example 3 was obtained by using materials and steps similar to those of Example 1 except that the configurations of a first transparent electrode layer and a second transparent electrode layer were changed. A material of each of the transparent electrode layers is indium tin oxide and the transparent electrode layers each have a surface resistance of 50 Ω/□. The transparent electrode layers are different in thickness between Example 1 and Example 3.

### (Example 4)

A light control sheet according to Example 4 was obtained by using materials and steps similar to those of Example 1 except that the configurations of a first transparent electrode layer and a second transparent electrode layer were changed. A material of each of the transparent electrode layers is indium tin oxide and the transparent electrode layers each have a surface resistance of 30 Ω/□. The transparent electrode layers are different in thickness between Example 1 and Example 4.

### (Example 5)

A light control sheet according to Example 5 was obtained by using materials and steps similar to those of Example 1 except that the configurations of a first transparent electrode layer and a second transparent electrode layer were changed. A material of each of the transparent electrode layers is silver alloy and the transparent electrode layers each have a surface resistance of 10 Ω/□. The transparent electrode layers have different materials and thicknesses between Example 1 and Example 5.

### (Example 6)

A light control sheet according to Example 6 was obtained by using materials and steps similar to those of Example 1 except that the configurations of a first transparent electrode layer and a second transparent electrode layer were changed. A material of each of the transparent electrode layers is silver alloy and the transparent electrode layers each have a surface resistance of 8 Ω/□. The transparent electrode layers have different materials and thicknesses between Example 1 and Example 6.

### (Example 7)

A light control sheet according to Example 7 was obtained by using materials and steps similar to those of Example 1 except that the configurations of a first transparent electrode layer and a second transparent electrode layer were changed. A material of each of the transparent electrode layers is a silver nanowire and the transparent electrode layers each have a surface resistance of 30 Ω/□. The transparent electrode layers have different materials and thicknesses between Example 1 and Example 7.

### (Comparative Example 1)

A light control sheet according to a comparative example 1 was obtained by using materials and steps similar to those of Example 1 except that the configurations of a first transparent electrode layer and a second transparent electrode layer were changed. A material of each of the transparent electrode layers is indium tin oxide and the transparent electrode layers each have a surface resistance of 300 Ω/□. The transparent electrode layers are different in thickness between Example 1 and the comparative example 1.

### (Comparative Example 2)

A light control sheet according to a comparative example 2 was obtained by using materials and steps similar to those of Example 1 except that the configurations of a first transparent electrode layer and a second transparent electrode layer were changed. A material of each of the transparent electrode layers is poly(3,4-ethylenedioxythiophene) and the transparent electrode layers each have a surface resistance of 170 Ω/□. The transparent electrode layers have different materials and thicknesses between Example 1 and the comparative example 2.

### (Evaluation Method)

### <Voltage Drop Measurement>

The light control sheets according to the respective Examples and the respective comparative examples were each formed in a rectangular shape having a short side of 1000 mm and a long side of 3000 mm and a voltage drop measurement was carried out under two types of conditions, a condition 1 and a condition 2.

A first connection region and a second connection region were formed at a corner one by one along one short side, and a first wiring section and a second wiring section were connected in the condition 1. FPCs each having a width of 50 mm were used as the wiring sections. The corner opposed to the corner at which the connection regions were disposed was then set as a measurement target region.

A first connection region and a second connection region were formed one by one at the corner located at one of the ends of one short side along the short side, and a first connection region and a second connection region were further formed one by one at the corner located at the other end of the short side in the condition 2. First wiring sections were then connected to the respective first connection regions and second wiring sections were connected to the respective second connection regions. FPCs each having a width of 50 mm were used as the wiring sections. The middle section of the short side opposed to the short side at which the connection regions were disposed was then set as a measurement target region.

As described above, voltages are input from two poles in the condition 1 and voltages are input from four poles in the condition 2.

In a voltage drop measurement, the effective voltage in a connection region and the effective voltage in a measurement target region were measured when each of the input voltages was supplied. An input voltage was an alternating-current voltage and was set such that the effective voltage in the connection region had a 20-V interval within a range of 40 V or more and 120 V or less. Voltage drop ratios were then calculated for the respective input voltages in accordance with (Equation 1) below. The average value of the voltage drop ratios of the respective input voltages was used as a voltage drop ratio Dr for each of the Examples. That is, the voltage drop ratio is the percentage of the effective voltage difference between a connection region and a measurement target region to the effective voltage of the connection region. voltage drop ratio (%) = (effective voltage of connection region - effective voltage of measurement target region) × 100/effective voltage of connection region ... (Equation 1)

### <Driving Confirmation>

An input voltage that was an alternating-current voltage was set such that the effective voltage in a connection region was 80 V. It was visually confirmed for the respective Examples and the respective comparative examples whether it was possible to switch the transparent state and the opaque state in the whole of the light control sheet when the input voltage was switched on and off. A case where it was possible to switch the transparent state and the opaque state in the whole of the light control sheet was evaluated as "∘" and a case where the light control sheet had a region in which it was not possible to switch the transparent state and the opaque state was evaluated as "×".

### (Evaluation Results)

Table 1 shows the surface resistances of the transparent electrode layers, the light transmittances of the laminated bodies of the transparent electrode layers and the transparent support layers, and the voltage drop ratios Dr and evaluation results of driving confirmation under the condition 1 and the condition 2 for the respective Examples and the respective comparative examples.

**[Table 1]**

| | Surface resistance value (Ω/□) | Transmittance (%) | Condition 1 | | Condition 2 | |
|---|---|---|---|---|---|---|
| | | | Voltage drop ratio | Drivability | Voltage drop ratio | Drivability |
| Example 1 | 150 | 89.9 | 42% | ○ | 33% | ○ |
| Example 2 | 80 | 89.0 | 20% | ○ | 10% | ○ |
| Example 3 | 50 | 88.4 | 16% | ○ | 1% or less | ○ |
| Example 4 | 30 | 86.2 | 10% | ○ | 1% or less | ○ |
| Example 5 | 10 | 88.3 | 1% | ○ | 1% or less | ○ |
| Example 6 | 8 | 20.0 | 1% or less | ○ | 1% or less | ○ |
| Example 7 | 30 | 83.0 | 6% | ○ | 1% or less | ○ |
| Comparative example 1 | 300 | 88.3 | 99% | × | 80% | × |
| Comparative example 2 | 170 | 86.2 | 87% | × | 77% | × |

As shown in Table 1, the distance between a connection region and a measurement target region is shorter in the condition 2 than the distance in the condition 1 and the condition 2 thus has a lower voltage drop ratio. As shown by Examples 1 to 7, if a transparent electrode layer has a surface resistance of 150 Ω/□ or less, the voltage drop ratio Dr remains 50% or less even under the condition 1 and it is possible to switch the transparent state and the opaque state in the whole of a light control sheet.

Meanwhile, as shown by the comparative examples 1 and 2, when the voltage drop ratio Dr exceeds 75%, switching between the transparent state and the opaque state does not work near a measurement target region.

The formation of black dots at the time of the application of a high voltage was verified by fabricating light control sheets according to test examples.

### (Test Example 1)

A light control sheet including a light control layer of the polymer network type was fabricated. The light control sheet according to test example 1 has the layer configuration illustrated in Fig. 2.

Specifically, an acryl-based monomer that is an UV-polymerizable compound, a liquid crystal composition having positive dielectric anisotropy, and a polymerization initiator were mixed to prepare a coating solution. The coating solution was used and a coating film was formed to be sandwiched between a first transparent electrode layer supported by a first transparent support layer and a second transparent electrode layer supported by a second transparent support layer. A laminated body including the coating film was then irradiated with ultraviolet rays. This polymerized the acryl-based monomers in the coating film to form a polymer network and phase-separated the liquid crystal composition to form a light control layer in which the liquid crystal composition was held in the polymer network. The thickness of the light control layer is 5 µm.

A material of each of the transparent support layers is polyethylene terephthalate. A material of each of the transparent electrode layers is indium tin oxide and the maximum peak height Rp of each of the transparent electrode layers is 15 nm.

### (Test Example 2)

A light control sheet according to test example 2 was obtained by using materials and steps similar to those of test example 1 except that transparent electrode layers different in surface roughness were used. In test example 2, the thickness of a light control layer is 5 µm and the maximum peak height Rp of each of the transparent electrode layers is 80 nm.

### (Test Example 3)

A light control sheet according to test example 3 was obtained by using materials and steps similar to those of test example 1 except that transparent electrode layers different in surface roughness were used. In test example 3, the thickness of a light control layer is 5 µm and the maximum peak height Rp of each of the transparent electrode layers is 180 nm.

### (Test Example 4)

A light control sheet according to test example 4 was obtained by using materials and steps similar to those of test example 1 except that transparent electrode layers different in surface roughness were used and the thickness of a light control layer was changed. In test example 4, the thickness of a light control layer is 20 µm and the maximum peak height Rp of each of the transparent electrode layers is 320 nm.

### (Test Example 5)

A light control sheet according to test example 5 was obtained by using materials and steps similar to those of test example 1 except that transparent electrode layers different in surface roughness were used. In test example 5, the thickness of a light control layer is 5 µm and the maximum peak height Rp of each of the transparent electrode layers is 320 nm.

### (Test Example 6)

A light control sheet according to test example 6 was obtained by using materials and steps similar to those of test example 1 except that transparent electrode layers different in surface roughness were used and the thickness of a light control layer was changed. In test example 6, the thickness of a light control layer is 20 µm and the maximum peak height Rp of each of the transparent electrode layers is 520 nm.

### (Test Example 7)

A light control sheet according to test example 7 was obtained by using materials and steps similar to those of test example 1 except that transparent electrode layers different in surface roughness were used. In test example 7, the thickness of a light control layer is 5 µm and the maximum peak height Rp of each of the transparent electrode layers is 520 nm.

### (High Voltage Application Test)

A high test voltage was applied to the light control sheet according to each of test examples 1 to 7 and it was visually confirmed whether black dots were formed in the light control sheet after the application. A case where no black dots were observed was expressed as "∘", a case where one to five black dots were observed was expressed as "Δ", and a case where six or more black dots were observed was expressed as "×". The light control sheet according to each test example has an area of 7.0 × 10⁵ mm².

### (Test Results)

Table 2 shows the maximum peak heights Rp of the transparent electrode layers, the thicknesses of the light control layers, the test voltages, and test results for test examples 1 to 7.

**[Table 2]**

| | Maximum peak height Rp (nm) | Thickness of light control layer (µm) | Test voltage (V) | Test result |
|---|---|---|---|---|
| Test example 1 | 15 | 5 | 200 | ○ |
| Test example 2 | 80 | 5 | 200 | ○ |
| Test example 3 | 180 | 5 | 200 | ○ |
| Test example 4 | 320 | 20 | 200 | ○ |
| Test example 5 | 320 | 5 | 200 | × |
| Test example 6 | 520 | 20 | 200 | × |
| Test example 7 | 520 | 5 | 200 | × |

As shown in Table 2, in test examples 6 and 7 in each of which the maximum peak height Rp was 520 nm, black dots were observed in both a case where the thickness of the light control layer was 20 µm and a case where the thickness of the light control layer was 5 µm.Meanwhile, in test examples 4 and 5 in each of which the maximum peak height Rp was 320 nm, no black dots were observed in a case where the thickness of the light control layer was 20 µm, but black dots were observed in a case where the thickness of the light control layer was 5 µm. In test examples 1 to 3 in each of which the maximum peak height Rp was 200 nm or less, no black dots were then observed in a case where the thickness of the light control layer was 5 µm.

As described above, it was confirmed that, as the thickness of the light control layer increased, more black dots were suppressed from being formed even when a transparent electrode layer had the great maximum peak height Rp. As long as the maximum peak height Rp was 200 nm or less, it was, however, possible to suppress black dots from being formed even in a case where the light control layer is thin.

### (Test Example 11)

A light control sheet including a light control layer of the polymer network type was fabricated. The light control sheet according to test example 11 has the layer configuration illustrated in Fig. 2.

Specifically, an acryl-based monomer that is an UV-polymerizable compound, a liquid crystal composition having positive dielectric anisotropy, and a polymerization initiator were mixed to prepare a coating solution. The coating solution was used and a coating film was formed to be sandwiched between a first transparent electrode layer supported by a first transparent support layer and a second transparent electrode layer supported by a second transparent support layer. A laminated body including the coating film was then irradiated with ultraviolet rays. This polymerized the acryl-based monomers in the coating film to form a polymer network and phase-separated the liquid crystal composition to form a light control layer in which the liquid crystal composition was held in the polymer network. The thickness of the light control layer is 5 µm. A material of each of the transparent support layers is polyethylene terephthalate. A material of each of the transparent electrode layers is indium tin oxide.

### (Test Examples 12 and 13)

A light control sheet according to each of test examples 12 and 13 was obtained by using materials and steps similar to those of test example 11 except that orientation layers were formed on respective transparent electrode layers and a light control layer was formed by sandwiching a coating film between the first orientation layer and the second orientation layer. It is to be noted that a liquid crystal composition having negative dielectric anisotropy was used as the liquid crystal composition. The light control sheet according to each of test examples 12 and 13 has the layer configuration illustrated in Fig. 3. A material of each of the orientation layers is polyimide.

### (Test Example 14)

A light control sheet according to test example 14 was obtained by using materials and steps similar to those of test example 11 except that the thickness of a light control layer was changed to 7 µm.

### (Test Example 15)

A light control sheet according to test example 15 was obtained by using materials and steps similar to those of test example 11 except that orientation layers were formed on respective transparent electrode layers, a light control layer was formed to be sandwiched between the first orientation layer and the second orientation layer, and the thickness of the light control layer was changed to to 7 µm. It is to be noted that a liquid crystal composition having negative dielectric anisotropy was used as the liquid crystal composition. The light control sheet according to test example 15 has the layer configuration illustrated in Fig. 3. A material of each of the orientation layers is polyimide.

### (Test Example 16)

A light control sheet according to test example 16 was obtained by using materials and steps similar to those of test example 11 except that the thickness of a light control layer was changed to 16 µm.

### (Test Example 17)

A light control sheet according to test example 17 was obtained by using materials and steps similar to those of test example 11 except that the thickness of a light control layer was changed to 20 µm.

### (High Voltage Application Test)

A high test voltage was applied to the light control sheet according to each of test examples 11 to 17 and it was visually confirmed whether black dots were formed in the light control sheet after the application. A case where no black dots were observed was expressed as "∘", a case where one to five black dots were observed was expressed as "Δ", and a case where six or more black dots were observed was expressed as "×". The light control sheet according to each test example has an area of 7.0 × 10⁵ mm².

### (Test Results)

Table 3 shows the thicknesses of the light control layers, the presence or absence of the orientation layers, the test voltages, and test results for test examples 11 to 17.

**[Table 3]**

| | Thickness of light control layer (µm) | Orientation layer | Test voltage (V) | Test result |
|---|---|---|---|---|
| Test example 11 | 5 | Absent | 140 | × |
| Test example 12 | 5 | Present | 180 | ○ |
| Test example 13 | 5 | Present | 200 | Δ |
| Test example 14 | 7 | Absent | 200 | × |
| Test example 15 | 7 | Present | 200 | ○ |
| Test example 16 | 16 | Absent | 200 | ○ |
| Test example 17 | 20 | Absent | 200 | ○ |

As shown in Table 3, in test examples 11 to 13 in each of which the thickness of the light control layer is 5 µm, more black dots are suppressed from being formed when orientation layers are provided. In addition, in test examples 14 and 15 in each of which the thickness of the light control layer is 7 µm, more black dots are suppressed from being formed when orientation layers are provided.

More black dots are suppressed from being formed in a thicker light control layer when a higher voltage is applied in comparison with test examples 11, 14, 16, and 17 in each of which no orientation layer is provided. If the thickness of a light control layer is 15 µm or more, black dots are preferably suppressed from being formed even when a high voltage of 200 V is applied.

In addition, more black dots are also suppressed in this case from being formed in a thicker light control layer when a higher voltage is applied in comparison with test examples 12, 13, and 15 in each of which an orientation layer is provided. If the thickness of a light control layer is 7 µm or more, black dots are preferably suppressed from being formed even when a high voltage of 200 V is applied.

As described above in the embodiment and the Examples, the light control sheets offer effects listed below.
(1) The transparent electrode layers 31 and 32 each have a surface resistance of 150 Ω/□ or less. This suppresss a voltage drop and it is therefore possible to favorably switch the transparent state and the opaque state in a wide area of a light control sheet.
(2) The maximum peak height Rp of each of surfaces of the transparent electrode layers 31 and 32 is 200 nm or less. This suppresss raised portions on the surfaces of the transparent electrode layers 31 and 32 from being modified to form black dots at the time of the application of a high voltage. The quality of the appearance of the light control sheet is therefore prevented from decreasing.
(3) There are provided insulating layers between the light control layer 20 and the transparent electrode layers 31 and 32, thereby suppressing black dots from being formed at the time of the application of a high voltage even in a case where the light control layer 20 is thin.
(4) The transparent functional layer 70 is provided, the transparent electrode layers 31 and 32 each have positive chromaticity b*, and the transparent functional layer 70 has negative chromaticity b*. The influence of the yellowish transparent electrode layers 31 and 32 is therefore corrected by the bluish transparent functional layer 70. This facilitates the light control sheet to look colorless in the transparent state.
(5) **In** a case where a light control sheet has a shape that is applied to an automotive door glass, the connection regions SA and SB are disposed at positions corresponding to a corner of the automotive door glass along the side corresponding to the bottom side of the automotive door glass. This suppresses increase in variation of the distances from the connection regions SA and SB to respective sections of the bent side. It is easier to equalize voltages applied to the ends of the light control sheet and some of the ends are each suppressed from having a greater voltage drop. This makes it possible to stably switch the transparent state and the opaque state in a wide area of the light control sheet.

## Claims

1. A light control sheet comprising:
a light control layer including a liquid crystal composition; and
a first transparent electrode layer and a second transparent electrode layer that are a pair of transparent electrode layers, the pair of transparent electrode layers sandwiching the light control layer, wherein
the light control sheet has a first connection region to which a wiring that applies a voltage to the first transparent electrode layer is connected and a second connection region to which a wiring that applies a voltage to the second transparent electrode layer is connected,
the first connection region and the second connection region are disposed along one side of the light control sheet as viewed from a position opposed to a front surface of the light control sheet, and
the first transparent electrode layer and the second transparent electrode layer each have a surface resistance of 150 Ω/□ or less.

2. The light control sheet according to claim 1, wherein maximum peak height Rp of each of surfaces of the first transparent electrode layer and the second transparent electrode layer is 200 nm or less.

3. The light control sheet according to claim 1, comprising a pair of insulating layers located between the light control layer and the pair of transparent electrode layers.

4. The light control sheet according to claim 1, wherein
the light control sheet has a shape that is applied to an automotive door glass, and
the first connection region and the second connection region are each disposed at a position corresponding to a corner of the automotive door glass along a side corresponding to a bottom side of the automotive door glass.

5. The light control sheet according to claim 1, wherein
the light control sheet further comprises a transparent functional layer,
respective absorption bands of the first transparent electrode layer and the second transparent electrode layer in a visible region and an absorption band of the transparent functional layer in the visible region are different from each other, and
the transparent electrode layers each have positive chromaticity b* and the transparent functional layer has negative chromaticity b* in a CIE 1976 (L*a*b*) color system.
